# EUROPEAN PATENT APPLICATION

(11) **EP 2 830 080 A1**
(43) Date of publication of application: **28.01.2015**
(21) Application number: 13763716.1
(22) Date of filing: 21.03.2013
(51) Int. Cl.: H01H 37/76, C22C 5/06, C22C 9/00, C22C 9/02, C22C 9/06, C22C 32/00

(54) **ELECTRODE MATERIAL HAVING CLAD STRUCTURE**

(30) Priority: 22.03.2012 JP 2012064680
(71) Applicant: Tanaka Kikinzoku Kogyo K.K., Chiyoda-ku Tokyo 100-6422 (JP)
(72) Inventor: MATSUO, Hiroshi, Hiratsuka-shi Kanagawa 254-0076 (JP); WADA, Ryoe, Hiratsuka-shi Kanagawa 254-0076 (JP)
(74) Representative: Dey, Michael
(86) International application number: PCT/JP2013/057986
(87) International publication number: WO 2013/141273

(57) **Abstract**

Provided is an electrode material constituting a movable electrode 50 of a thermal fuse 1, wherein the electrode material has a clad structure where a base layer including Cu or a Cu alloy is joined to a contact point layer made of a Ag-CuO based oxide-dispersion-strengthened alloy. The present invention is an electrode material that is suitable for a movable electrode of a thermal fuse and can solve the problem of the failure of contact with the case in association with long-term use. In this electrode material, it is preferable that a contact layer including Ag be joined to a back surface of the base layer in order to improve resistance to contact with a case 10.

## Description

### BACKGROUND OF THE INVENTION

### FIELD OF THE INVENTION

The present invention relates to an electrode material, especially to a material suitable for a movable electrode of a thermal fuse.

### DESCRIPTION OF THE RELATED ART

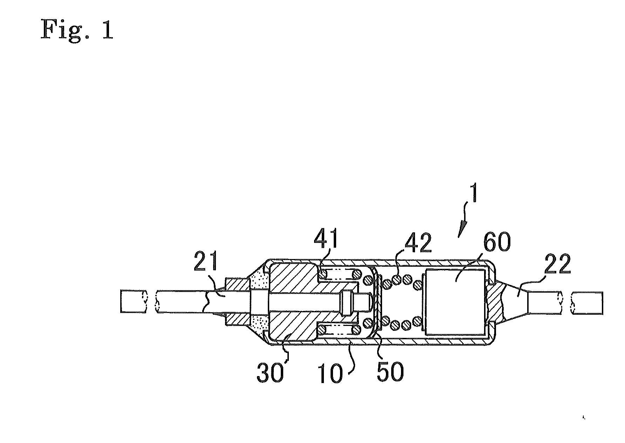

Figure 1 shows a configuration of a common thermal fuse. In the tthermal fuse 1, leads 21 and 22 are connected to a case 10 made of a conductive metal, and an insulating material 30, springs 41 and 42, a movable electrode 50, and a fuse element 60 are mounted on the inside of the case 10. The spring 41 is installed between the movable electrode 50 and the insulating material 30, and the spring 42 is installed between the movable electrode 50 and the fuse element 60. The movable electrode 50 is movable while contacting the inner surface of the case 10. In normal mode (the state shown by Fig. 1), the thermal fuse is designed so that electric current may flow from the lead 21 to the movable electrode 50 and the case 10 and further to the lead 22. And when overheating occurs because of an overload on an electronic device or the like to which the thermal fuse is connected, the fuse element 60 deforms or melts at a predetermined operating temperature (generally around 240°C), and thus the spring 42 expands because of unloading, and at the same time the spring 41 expands to thereby move and separate the movable electrode 50 from the lead 21. The above operation interrupts the electric current.

The constituent material of the movable electrode of the thermal fuse having the above-mentioned operation mechanism is required to have resistance to melt adhesion to the lead in addition to conductivity as an electrode material. This is because the movable electrode is always electrified on condition that it is in contact with the lead, and melt adhesion, if occurs, becomes a cause of operational failure of the thermal fuse. For such a requirement, a Ag-CuO based oxide dispersion alloy is known as a constituent material of a conventional movable electrode (Patent Document 1: hereinafter, this alloy is referred to as a Ag-CuO alloy).

The Ag-CuO alloy is an alloy where CuO is dispersed in a matrix of Ag, and has excellent melt adhesion resistance. In addition, the Ag-CuO alloy, unlike a Ag-CdO alloy that has been used before, does not use Cd, which is a toxic substance. For these reasons, examples of the application of the Ag-CuO alloy are increasing.

### [Prior Art Document]

### [Patent Document]

[Patent Document 1] Japanese Patent Application Laid-Open No. 2011-137198

### SUMMARY OF THE INVENTION

### [Technical Problem]

However, according to the examination of the present inventors, in thermal fuses using a movable electrode including the Ag-CuO alloy, the problem of melt adhesion resistance of the movable electrode is mitigated, but it has been confirmed that there is an individual where failure in electric conduction is produced by contact failure occurring between the case and the movable electrode in association with long-term use. Although this problem does not occur in all thermal fuses, the use of thermal fuses that may cause such a problem will affect the reliability of electric devices.

Thus, an object of the present invention is to provide an electrode material that is suitable for a movable electrode of a thermal fuse and that can solve the problem of contact failure as described above.

### [Means for Solving the Problem]

The present inventors have examined a factor that causes the failure of contact with the case in a conventional movable electrode made of a Ag-CuO alloy. As a result, they have thought that a Ag matrix is softened when the Ag-CuO alloy is subjected to heating for a long period at an operating temperature (100°C or higher) of the thermal fuse, and the spring characteristics are degraded, and thus it becomes impossible to stably contact the case. Thus, the inventors have produced an electrode material cladded with a metal layer that can maintain the spring characteristics even when the Ag-CuO alloy is subjected to heating, to thereby secure its strength. This is the result of considering that although the Ag-CuO alloy has the problem of degradation in the spring characteristics described above, it is an excellent material in view of melt adhesion resistance. Adoption of such a clad structure can ensure compatibility between strength and melt adhesion resistance.

More specifically, the invention of the present application solving the above-mentioned problem is an electrode material constituting a movable electrode of a thermal fuse, wherein the electrode material has a clad structure where a base layer made of Cu or a Cu alloy is joined to a contact point layer made of a Ag-CuO based oxide-dispersion-strengthened alloy.

Hereinafter, the present invention will be described in detail. The electrode material according to the present invention has a clad structure where a plurality of metal layers laminate as mentioned above. These metal layers are a contact point layer that is made of a Ag-CuO alloy and functions as a contact material with a lead of a thermal fuse, and a base layer that is made of Cu or a Cu alloy and has the function of securing the strength of the contact point layer.

It is preferable that the Ag-CuO alloy constituting the contact point layer be an alloy obtained by subjecting a Ag-Cu alloy having 1 to 20 mass% of Cu to internal oxidation treatment. As mentioned above, the contact point layer is a contact material that contacts the lead of the thermal fuse, and thus is required to have melt adhesion resistance. The melt adhesion resistance of the Ag-CuO alloy varies depending on the amount of a dispersed oxide (CuO), which depends on the Cu content of the Ag-Cu alloy to be subjected to internal oxidation. Considering this, in order to secure suitable melt adhesion resistance, the Cu content of the Ag-Cu alloy to be subjected to internal oxidation is set to 1 to 20 mass%.

The base layer is made of Cu or a Cu alloy. In the case of Cu, an alloy composed of Cu having a small concentration of oxygen is preferable, such as so-called oxygen-free copper (OFC) and tough pitch copper (TPC). This is because conductivity can sufficiently be secured. Moreover, in the case of applying a Cu alloy to the base layer, a Cu alloy containing at least any of Sn, In, Cr, and Ni each at 0.1 to 3 mass% is preferable. This is because the spring characteristics and conductivity can be secured. When conductivity is considered important, it is preferable that the total concentration of Sn, In, Cr, and Ni be lowered, and that a Cu alloy containing 0.1 to 3 mass% in total be applied.

Moreover, in the electrode material having a clad structure according to the present invention, it is preferable that a contact layer made of Ag be joined to the back surface (the opposite side of the surface joined to the contact point layer) of the base layer. The present invention is an electrode material and therefore requires reduction in contact resistance at the time of contacting the case of the thermal fuse. The electrode having a clad structure as described above tends to increase the contact resistance more than in the state of a Ag-CuO alloy alone. Thus, the contact layer made of Ag can be provided to reduce resistance to contact with the case during use as a movable electrode. This Ag layer is preferably high purity Ag for reduction in the resistance value and is preferably constituted of 99.9 mass% or more of Ag.

The thickness of each metal layer of the above contact point layer, base layer, and contact layer is as follows. As for the thickness ratio between the contact point layer (Ag-CuO alloy) and the base layer (Cu or Cu alloy), it is preferable that the thickness of the contact point layer be 10 to 40% with respect to the total thickness of the contact point layer and the base layer. This is the result of considering securing strength. Meanwhile, the thickness of the contact layer (Ag) is not required to be so large in view of reduction in contact resistance and is preferably 0.5 to 5% with respect to the total thickness of the material as a whole. Suitable specific examples include the contact point layer of 15 to 25 µm, the base layer of 59 to 68 µm, and the contact layer of 1 to 3 µm.

Moreover, it is preferable that the electrode material according to the present invention be equipped with an intermediate layer made of Ag between the contact point layer and the base layer. Cu is contained in both of the Ag-CuO alloy as the contact point layer and Cu or the Cu alloy as the base layer. This is for securing the joinability thereof because they are heterogeneous materials in a precise sense. Ag constituting this intermediate layer is preferably high purity Ag and preferably 99.9 mass% or more of Ag. Moreover, it is preferable that the thickness of the intermediate layer be 0.5 to 5% with respect to the total thickness of the material as a whole including the intermediate layer. This intermediate layer is not an indispensable constituent because it does not affect the conductivity and strength of the electrode material, but the intermediate layer is useful in production of a movable electrode having a complicated shape which requires a high processing rate.

For production of the electrode material according to the present invention, a plate material, a foil material, or a tape material constituting the respective metal layers can be stacked, rolled, and joined to form a clad material. Also in an electrode material where the intermediate layer (Ag) is to be applied, this method allows for joining to the joint site. In addition, Ag of the contact layer and the intermediate layer can be formed by clad joining of the plate material, the foil material, or the tape material, or can be formed by a thin film production technique such as a plating method. Because these Ag layers are comparatively thin, these methods having excellent thickness control can be applied.

If needed, the clad material where each metal layer is joined can be subsequently rolled to adjust the whole thickness. Moreover, the clad material can be subjected to cutting processing, slit processing, and bending processing to provide a shape and a size required for a movable electrode of a thermal fuse.

### [Advantageous Effects of the invention]

The electrode material according to the present invention is suitable for a movable electrode of a thermal fuse, and is a Ag-CuO alloy cladded with Cu or a Cu alloy. Thereby, contact with the case of the thermal fuse can be maintained stably without degradation of the spring characteristics even under heating. The present invention uses the Ag-CuO alloy and thereby has good melt adhesion resistance intrinsically required for the movable electrode.

### BRIEF DESCRIPTION OF THE DRAWING

Fig. 1 is a diagram illustrating a structure of a common thermal fuse.

### DETAILED DESCRIPTION OF THE PREFERRED EMBODIMENTS

Hereinafter, suitable Examples of the present invention will be described. In the following embodiments, a plurality of electrode materials where a contact point layer, a base layer, a contact layer, and an intermediate layer were appropriately arranged were produced, and then characteristics thereof were evaluated.

First Embodiment: In the embodiment, an electrode material having a two-layer structure consisting of a contact point layer and a base layer was produced. A wire material (wire diameter: 4.5 mm) of a Ag-CuO alloy produced by subjecting a Ag-Cu alloy (Cu concentrations: 5, 10, and 12 mass%) to internal oxidation was provided and was rolled to 7 mm in width x 0.6 mm in thickness by rolling processing to thereby produce a Ag-CuO alloy (contact point layer) tape. Moreover, a wire material (wire diameter: 5.5 mm) of Cu (oxygen-free copper) or an Cu alloy (Cu-0.15 mass% Sn alloy, Cu-1 mass% Ni alloy) was subjected to rolling processing to 7 mm in width x 1.5 mm in thickness to thereby produce a Cu or Cu alloy (base layer) tape. Then, these two metal tapes were stacked and rolled in an inert atmosphere to thereby perform clad joining. This clad material was further rolled and subjected to slit processing to thereby provide a tape for an electrode material. At this time, the thickness of the Ag-CuO alloy (contact point layer) was 20 µm, and the thickness of Cu or the Cu alloy (base layer) was 64 µm (84 µm in total). This tape material was cut out to produce test pieces, and characteristic evaluation thereof was performed.

In the characteristic evaluation, the spring deflection limit of each of the produced test pieces was measured with a spring deflection limit test to thereby evaluate the spring characteristics thereof. Moreover, in order to check the conductivity of the electrode material itself, the specific resistance of a hoop material of 1 m was measured using a milliohm meter; and electric conductivity exceeding IACS 85% was defined as "⊙", and electric conductivity of 80 to 85% was defined as "O". Then, the test piece was heated to 240°C and maintained for 100 hours, and the spring characteristics and conductivity after the heating were measured in the same manner. The results are shown in Table 1. For comparison, the same measurement was performed on an electrode material made of the above-mentioned Ag-CuO alloy alone (84 µm in thickness).

**[Table 1]**

| | Contact point layer | Base layer | Spring deflection limit | (N/mm²) | Conductivity evaluation of electrode material itself | |
|---|---|---|---|---|---|---|
| | | | Before heating | After heating | Before heating | After heating |
| Example 1 | Ag-5%Cu0 | Cu | 113 | 83 | ⊚ | ⊚ |
| Example 2 | Ag-10%Cu0 | | 114 | 85 | ⊚ | ⊚ |
| Example 3 | Ag-12%Cu0 | | 116 | 86 | ⊚ | ⊚ |
| Example 4 | Ag-5%Cu0 | Cu-0.15%Sn | 188 | 169 | ⊚ | ⊚ |
| Example 5 | Ag-10%Cu0 | | 189 | 170 | ⊚ | ⊚ |
| Example 6 | Ag-12%Cu0 | | 192 | 167 | ⊚ | ⊚ |
| Example 7 | Ag-5%Cu0 | Cu-1%Ni | 198 | 187 | ○ | ○ |
| Example 8 | Ag-10%Cu0 | | 199 | 190 | ○ | ○ |
| Example 9 | Ag-12%Cu0 | | 198 | 190 | ○ | ○ |
| Comparative Example 1 | Ag-5%Cu0 (Monolayer) | | 89 | 74 | ○ | ○ |
| Comparative Example 2 | Ag-10%Cu0 (Monolayer) | | 90 | 76 | ○ | ○ |
| Comparative Example 3 | Ag-12%Cu0 (Monolayer) | | 92 | 77 | ○ | ○ |

As can be seen from Table 1, in the conventional electrode material having a monolayer made of the Ag-CuO alloy, the spring characteristics are lowered to less than 80 N/mm² by heating. In contrast to this, in each Example, the provision of the base layer complements reduction in the strength of the Ag-CuO alloy as a contact point layer and increases the spring characteristics of the electrode material by 10% or more. Moreover, the conductivity of the electrode material itself was sufficient in each of Examples and Comparative Examples in view of the IACS standards.

Second Embodiment: In the embodiment, an electrode material having a three-layer structure where a Ag layer as a contact layer was joined was produced and evaluated. First, a wire material (wire diameter: 4.0 mm) of Ag (purity: 99.9 or more) was provided and was rolled to 7 mm in width x 0.1 mm in thickness by rolling processing to produce a Ag tape. Then, a Ag-CuO alloy tape and a Cu or Cu alloy tape which were produced as in the First Embodiment were stacked and rolled in an inert atmosphere to thereby perform clad joining. Thereafter, rolling and slit processing were performed as in First Embodiment to thereby provide a tape for the electrode material. At this time, the thickness of the Ag-CuO alloy (contact point layer) was 20 µm, the thickness of Cu or the Cu alloy (base layer) was 62 µm, and the thickness of Ag (contact layer) was 2 µm (84 µm in total).

This tape material produced above was cut out to produce test pieces, and characteristic evaluation thereof was performed. The evaluation was performed before and after heating to 240°C, and spring deflection limit measurement was performed as in the First Embodiment. Moreover, contact resistance values were measured with a contact resistance meter as evaluation of conductivity. The results are shown in Table 2. The results of each of Examples and Comparative Examples of First Embodiment are also shown in Table 2.

**[Table 2]**

| | Contact point layer | Base layer | Contact layer | Spring deflection limit (N/mm²) | | Contact resistance (mΩ) | |
|---|---|---|---|---|---|---|---|
| | | | | Before heating | After heating | Before heating | After heating |
| Example 10 | Ag-5%Cu0 | Cu | Formed | 111 | 81 | 3. 7 | 3. 8 |
| Example 11 | Ag-10%Cu0 | | | 112 | 83 | 3. 7 | 3. 7 |
| Example 12 | Ag-12%Cu0 | | | 114 | 84 | 3.5 | 3.6 |
| Example 1 | Ag-5%Cu0 | | None | 113 | 83 | 33 | 10⁵ or more |
| Example 2 | Ag-10%Cu0 | | | 114 | 85 | 35 | 10⁵ or more |
| Example 3 | Ag-12%Cu0 | | | 116 | 86 | 36 | 10⁵ or more |
| Example 13 | Ag-5%Cu0 | Cu-0.15%Sn | Formed | 186 | 168 | 3.6 | 3. 7 |
| Example 14 | Ag-10%Cu0 | | | 187 | 169 | 3.7 | 3.8 |
| Example 15 | Ag-12%Cu0 | | | 188 | 166 | 3.5 | 3.9 |
| Example 4 | Ag-5%Cu0 | | None | 188 | 169 | 32 | 10⁵ or more |
| Example 5 | Ag-10%Cu0 | | | 189 | 170 | 34 | 10⁵ or more |
| Example 6 | Ag-12%Cu0 | | | 192 | 167 | 35 | 10⁵ or more |
| Example 16 | Ag-5%Cu0 | Cu-1%Ni | Formed | 197 | 186 | 3.7 | 3.6 |
| Example 17 | Ag-10%Cu0 | | | 198 | 190 | 3.3 | 3.6 |
| Example 18 | Ag-12%Cu0 | | | 197 | 189 | 3.6 | 3. 5 |
| Example 7 | Ag-5%Cu0 | | None | 198 | 187 | 28 | 10⁵ or more |
| Example 8 | Ag-10%Cu0 | | | 199 | 190 | 27 | 10⁵ or more |
| Example 9 | Ag-12%Cu0 | | | 198 | 190 | 28 | 10⁵ or more |
| Comparative Example 1 | Ag-5%Cu0 (Monolayer) | | | 89 | 74 | 7.1 | 9 |
| Comparative Example 2 | Ag-10%Cu0 (Monolayer) | | | 90 | 76 | 7.3 | 10 |
| Comparative Example 3 | Ag-12%Cu0 (Monolayer) | | | 92 | 77 | 8.2 | 12 |

It can be confirmed from Table 2 that the contact resistance is greatly improved by the addition of the Ag layer as the contact layer. In these Examples, the contact resistance is lower than that of conventional contact materials. It is deemed that the addition of the Ag layer does not have special influence on the spring characteristics of the electrode material.

Third Embodiment: In the embodiment, an electrode material having a four-layer structure where a Ag layer as an intermediate layer was joined was produced, and the effect of improving the joinability between the contact point layer and the base layer was inspected. The Ag tape material produced in Second Embodiment was used, and the Ag-CuO alloy tape, the Ag tape, the Cu or Cu alloy tape, and Ag tape of the First and Second Embodiments were stacked and rolled in an inert atmosphere to thereby perform clad joining. Then, rolling and slit processing were performed to thereby provide a tape for the electrode material. At this time, the thickness of the Ag-CuO alloy (contact point layer) was 20 µm, the thickness of Ag (intermediate layer) was 2 µm, the thickness of Cu or the Cu alloy (base layer) was 60 µm, and the thickness of Ag (contact layer) was 2 µm (84 µm in total).

This tape material produced above was cut out to thereby produce test pieces, and characteristic evaluation thereof was performed. In the evaluation, spring deflection limits before and after heating to 240°C were measured. For the electrode material after heating, the joining force between the contact point layer and the base layer was evaluated. In this evaluation, a folding test (a test where the material was folded by 180° and unfolded) was performed to thereby observe whether delamination occurred between the contact point layer and the base layer. In the evaluation, the case where no delamination occurred even when the folding test was performed twice or more times was defined as "⊙", and the case where no delamination occurred when the folding test was performed once was defined as "O". The results are shown in Table 3. The results of each of Examples (Examples 10 to 18) of Second Embodiment are also shown in Table 3.

**[Table 3]**

| | Contact point layer | Intermediate layer | Base layer | Contact layer | Spring deflection limit (N/mm²) | | Joinability |
|---|---|---|---|---|---|---|---|
| | | | | | Before heating | After heating | |
| Example 19 | Ag-5%Cu0 | Formed | Cu | Formed | 111 | 81 | ⊚ |
| Example 20 | Ag-10%Cu0 | | | | 112 | 82 | ⊚ |
| Example 21 | Ag-12%Cu0 | | | | 112 | 81 | ⊚ |
| Example 10 | Ag-5%Cu0 | None | | | 111 | 81 | ○ |
| Example 11 | Ag-10%Cu0 | | | | 112 | 83 | ○ |
| Example 12 | Ag-12%Cu0 | | | | 114 | 84 | ○ |
| Example 22 | Ag-5%Cu0 | Formed | Cu-0.15%Sn | Formed | 186 | 166 | ⊚ |
| Example 23 | Ag-10%Cu0 | | | | 186 | 168 | ⊚ |
| Example 24 | Ag-12%Cu0 | | | | 188 | 165 | ⊚ |
| Example 13 | Ag-5%Cu0 | None | | | 186 | 168 | ○ |
| Example 14 | Ag-10%Cu0 | | | | 187 | 169 | ○ |
| Example 15 | Ag-12%Cu0 | | | | 188 | 166 | ○ |
| Example 25 | Ag-5%Cu0 | Formed | Cu-1%Ni | Formed | 195 | 185 | ⊚ |
| Example 26 | Ag-10%Cu0 | | | | 196 | 188 | ⊚ |
| Example 27 | Ag-12%Cu0 | | | | 195 | 188 | ⊚ |
| Example 16 | Ag-5%Cu0 | None | | | 197 | 186 | ○ |
| Example 17 | Ag-10%Cu0 | | | | 198 | 190 | ○ |
| Example 18 | Ag-12%Cu0 | | | | 197 | 189 | ○ |

It was confirmed from Table 3 that the provision of the Ag layer as the intermediate layer increases the joining strength between the contact point layer and the base layer. However, even if the intermediate layer is not provided, delamination does not necessarily occur immediately upon processing. Therefore, it is preferable to determine whether or not the intermediate layer is provided based on whether or not complicated processing and a high processing rate are required in view of a shape and the like of the movable electrode.

### [Industrial Applicability]

The present invention is an electrode material having melt adhesion resistance and having a small decrease in spring characteristics due to heating, which is suitable for a movable electrode of a thermal fuse. According to the present invention, operational failure of the thermal fuse can be suppressed, and the reliability of various electric devices can be secured.

## Claims

1. An electrode material constituting a movable electrode of a thermal fuse, wherein the electrode material has a clad structure where a base layer comprising Cu or a Cu alloy is joined to a contact point layer comprising a Ag-CuO based oxide-dispersion-strengthened alloy.

2. The electrode material according to claim 1, wherein a contact layer comprising Ag is joined to a back surface of the base layer.

3. The electrode material according to claim 1 or claim 2, wherein an intermediate layer comprising Ag is further provided between the contact point layer and the base layer.

4. The electrode material according to any one of claim 1 to claim 3, wherein the Ag-CuO based oxide-dispersion-strengthened alloy constituting the contact point layer is an alloy obtained by subjecting a Ag-Cu alloy having 1 to 20 mass% Cu to internal oxidation treatment.

5. The electrode material according to any one of claim 1 to claim 4, wherein the Cu or the Cu alloy constituting the base layer is either of oxygen-free copper or tough pitch copper.

6. The electrode material according to any one of claim 1 to claim 4, wherein the Cu or the Cu alloy constituting the base layer is a Cu alloy containing at least any of Sn, In, Cr and Ni each at 0.1 to 3 mass%.

7. The electrode material according to any one of claim 1 to claim 6, wherein, as for a thickness ratio between the contact point layer and the base layer, a thickness of the contact point layer is 10 to 40% with respect to a total thickness of the contact point layer and the base layer.

8. The electrode material according to any one of claim 1 to claim 7, wherein a thickness of the contact layer is 0.5 to 5% with respect to a total thickness of the electrode material as a whole.

9. The electrode material according to any one of claim 1 to claim 8, wherein a thickness of the intermediate layer is 0.5 to 5% with respect to a total thickness of the electrode material as a whole.
